# EUROPEAN PATENT APPLICATION

(11) **EP 3 879 126 A1**
(43) Date of publication of application: **15.09.2021**
(21) Application number: 20162189.3
(22) Date of filing: 10.03.2020
(51) Int. Cl.: F15B 15/14, F15B 15/18, B64C 25/22, F15B 1/26

(54) **HYDRAULIC ACTUATOR WITH INTEGRATED RESERVOIR**

(71) Applicant: Safran Landing Systems UK Ltd, Gloucester, Gloucestershire GL2 9QH (GB)
(72) Inventor: EVANS, Royston Alan, Gloucester, Gloucestershire GL10 3EN (GB); SHAW, Paul, Sambourne, Worcestershire B96 6PA (GB)
(74) Representative: Wardle, Callum Tarn

(57) **Abstract**

A hydraulic actuator comprising: a housing defining a first cavity; a piston, wherein at least a portion of the piston is slidably received within the first cavity of the housing; a balance tube located within the first cavity of the housing, wherein the balance tube defines a second cavity; and a hydraulic fluid reservoir located within the second cavity of the balance tube.

## Description

### Background

Most modern aircraft include a number of hydraulic actuators for various purposes. Typical uses of the hydraulic actuators include operation of moveable flight controls, such as for example wing flaps, and for operation of the landing gear, such as landing gear retraction actuators and pitch trimmer actuators. Previously the aircraft included a centralised hydraulic supply in which hydraulic operating fluid was provided to the various hydraulic actuators from one or more centralised hydraulic pumps, typically driven by one or more of the aircraft engines. However the current trend is to design aircraft that do not have a centralised hydraulic power system, since the reduction in hydraulic piping weight and the removal of the engine driven hydraulic pump gives rise to an increase in overall aircraft fuel efficiency. Instead, individual actuators are provided with their own dedicated localised hydraulic circuitry, typically including an electrically driven hydraulic pump. This configuration typically requires a number of separate components, such as the hydraulic pump, working fluid reservoir, hydraulic manifolds and the actuator cylinder itself to be packaged together in the same locality as the actuator within the aircraft structure. It is therefore beneficial for such self-contained actuator systems to be as compact as possible.

### Summary of the Invention

According to a embodiments of the present application there is provided a hydraulic actuator comprising: a housing defining a first cavity; a piston, wherein at least a portion of the piston is slidably received within the first cavity of the housing; a balance tube located within the first cavity of the housing, wherein the balance tube defines a second cavity; and a hydraulic fluid reservoir located within the second cavity of the balance tube.

The hydraulic fluid reservoir may comprise a hydraulic accumulator, which in turn is preferably a compressed gas accumulator.

The hydraulic fluid reservoir may be in fluid communication with a hydraulic pump, which preferably is located within the second cavity of the balance tube. The hydraulic pump may be electrically actuated.

According to further embodiments of the present application there is also provided an aircraft landing gear including a hydraulic actuator as described above, where the hydraulic actuator is preferably configured to retract the landing gear.

### Brief description of the Drawings

Various embodiments of the present invention are described below, by way of nonlimiting examples only, with reference to the accompanying drawings, of which:
Figure 1 schematically illustrates a portion of an aircraft and a main landing gear assembly;
Figure 2 schematically illustrates a non-balanced hydraulic actuator system;
Figure 3 schematically illustrates a balanced hydraulic actuator system; and
Figure 4 schematically illustrates a balanced hydraulic actuator system according to an embodiment of the present invention.

### Detailed Description

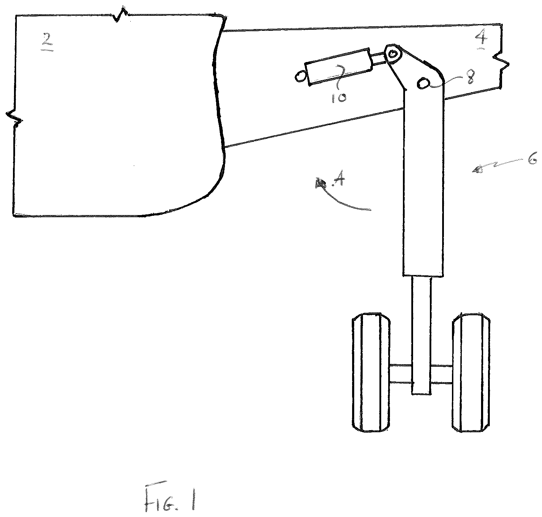

Figure 1 schematically illustrates a portion of an aircraft fuselage 2 and a portion of one of the aircraft's wings 4. As is common practice, one of the aircraft's main landing gear assemblies 6 is mounted to the wing 4. The main landing gear 6 is configured to be able to pivot about a mounting point 8 on the wing. A hydraulic actuator 10 is further pivotally connected to an upper portion of the main landing gear 6 at one end and at the other end of the actuator is mounted to part of the wing structure. In use, extension (or in some cases retraction) of the hydraulic actuator 10 causes the main landing gear 6 to pivot about the mounting point 8 so as to cause the landing gear to swing up in the direction of arrow A and to be stowed within the landing gear bay defined within the wing 4 and fuselage 2 of the aircraft.

As previously noted, there is a trend for removing the centralised hydraulic supply from aircraft. This requires localised (or autonomous) hydraulic actuator solutions to be developed. Whilst there have been many developments of Electro-Hydraulic Actuators (EHA) for use in flight controls, there has to date been little development in autonomous hydraulic actuation systems suitable for use in landing gear mechanisms. The configuration typically used in flight control applications has separate hydraulic reservoir, pump, manifolds and actuation cylinder packaged side by side to fit in the space envelope along the wing trailing edge. However, due to the considerably larger size of landing gear actuators and the landing gear bay space constraints, this would not be a suitable configuration for a landing gear actuator.

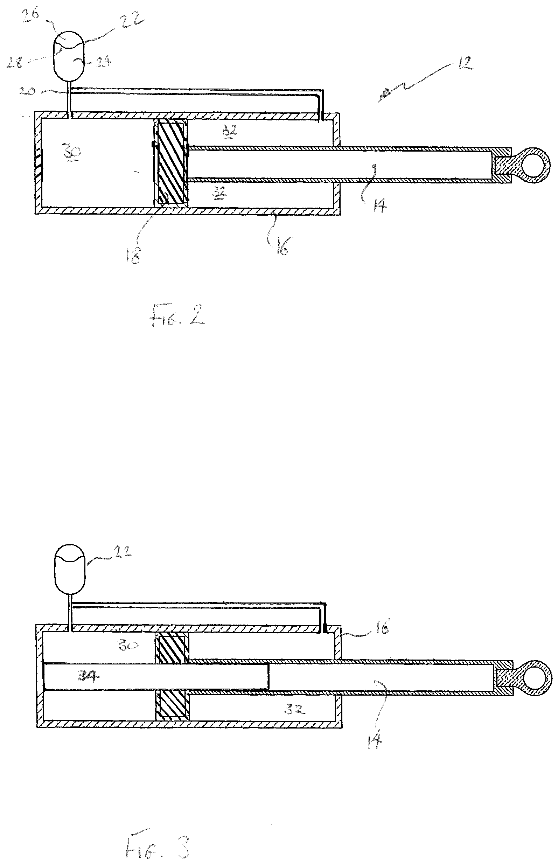

By way of background, Figure 2 schematically illustrates what is termed a non-balanced hydraulic actuator system. A hydraulic actuator 12 is provided that includes a piston 14 that is slidably received within a main housing 16. The main housing 16 defines an overall (first) cavity in which the piston 14 translates. The head of the piston 18 divides the main cavity of the actuator into two separate working chambers, one on either side of the piston head 18. Each working chamber contains hydraulic fluid and is in fluid communication, via appropriate piping 20, to a hydraulic accumulator 22. The hydraulic accumulator includes a reservoir 24 of hydraulic fluid that is separated from a gas chamber 26 that contains a compressible gas by a flexible membrane 28. In operation, a hydraulic pump (not illustrated) pumps hydraulic fluid into the first working chamber 30, located to the left of the piston head 18 as shown in Figure 2, in order to cause the piston 14 to extend, whilst pumping hydraulic fluid into the second working chamber 32, located to the right of the piston head as illustrated in Figure 2, causes the actuator piston 14 to retract. As will be appreciated, because of the volume of portion of the piston that is located within the second working chamber 32, the volume of the second working chamber 32 is less than the volume of the first working chamber 30 and therefore a greater volume of hydraulic fluid is expelled from the first working chamber 30 when the piston is retracted than is expelled from the second working chamber 32 when the piston is extended. The volume of the hydraulic accumulator 22 must therefore be sufficient to accommodate the difference in hydraulic fluid volume between the two working chambers. The system of Figure 2 is referred to as a non-balanced system because of the difference in volumes between the two working chambers.

Many large hydraulic actuators of the type used for aircraft landing gear actuation incorporate a balance tube that is used to reduce the difference in volume between the two working chambers of the actuator. An example of a hydraulic actuator incorporating a balance tube is schematically illustrated in Figure 3. As in Figure 2, a hydraulic actuator 12 is provided having a piston 14 and main housing 16. However, in the balanced system of Figure 3 the piston 14 is hollow and is configured to slide over a surface of a balance tube 34 as the piston is extended and retracted. The cavity defined by the hollow piston and the balance tube is typically vented to atmosphere. As will be appreciated, the inclusion of the balance tube 34 reduces the volume of hydraulic fluid in the first working chamber 30 and by appropriately sizing the balance tube the difference in volume between the first and second working chambers can be substantially reduced, and therefore the required size of the hydraulic accumulator 22 can be correspondingly reduced.

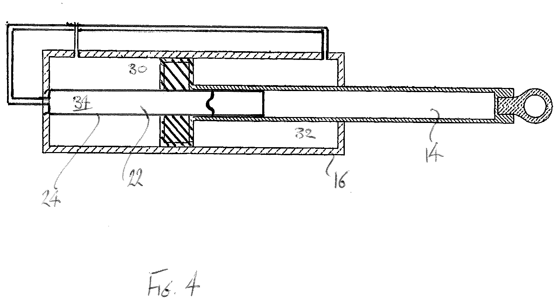

In conventional balanced actuator systems the interior volume of the balance tube 34 is dead space, i.e. unused space. Additionally, a hydraulic accumulator is still required. In embodiments of the present invention these disadvantages are sought to be overcome and the space envelope of the overall actuator system further reduced. An embodiment of a balanced actuator system according to the present invention is schematically illustrated in Figure 4. As with the conventional balance actuator system shown in Figure 3, the actuator system of the embodiment of the present invention shown in Figure 4 includes a hydraulic actuator having a main housing 16 and a piston 14, with the piston being slidably received within the main housing, and also being slidably received over a balance tube 34. However, in the embodiment illustrated in Figure 4, the hydraulic reservoir/accumulator is located within the interior space envelope of the balance tube 34. The hydraulic reservoir 24 is in fluid communication with the first and second working chambers 30, 32. As will be appreciated, whilst the embodiments schematically illustrated in Figure 4 indicates the hydraulic accumulator 22 as being formed by the side walls of the balance tube 34 itself, the accumulator 22 may equally be provided as a separate accumulator unit that is housed within the space envelope defined within the interior of the balance tube 34. For example, the accumulator may be of the gas pressurised metal bellows type.

By utilising the interior space of the balance tube for the hydraulic fluid reservoir and/or accumulator, the overall space envelope of the actuator system is further reduced, thus enabling the "autonomous" actuator to be used in locations on the aircraft that have a restricted space constraints, such as for the main landing gear retraction actuator. In further embodiments the hydraulic pump (not illustrated) may also be located within the actuator assembly, preferably within the interior space of the balance tube, as opposed to being a separate standalone item. This further reduces the overall space envelope of the actuator system.

## Claims

1. A hydraulic actuator comprising:
a housing defining a first cavity;
a piston, wherein at least a portion of the piston is slidably received within the first cavity of the housing;
a balance tube located within the first cavity of the housing, wherein the balance tube defines a second cavity; and
a hydraulic fluid reservoir located within the second cavity of the balance tube.

2. The hydraulic actuator of claim 1, wherein the hydraulic fluid reservoir comprises a hydraulic accumulator.

3. The hydraulic actuator of claim 2, wherein the hydraulic accumulator comprises a compressed gas accumulator.

4. The hydraulic actuator of any preceding claim, wherein the hydraulic fluid reservoir is in fluid communication with a hydraulic pump.

5. The hydraulic actuator of claim 4, wherein the hydraulic pump is located within the second cavity of the balance tube.

6. The hydraulic actuator of claim 4 or 5, wherein the hydraulic pump is electrically actuated.

7. An aircraft landing gear including a hydraulic actuator according to any preceding claim.

8. The aircraft landing gear of claim 7, wherein the hydraulic actuator is configured to retract the landing gear.
